# EUROPEAN PATENT APPLICATION

(11) **EP 4 803 705 A1**
(43) Date of publication of application: **09.09.2026**
(21) Application number: 24885247.7
(22) Date of filing: 15.08.2024
(51) Int. Cl.: E02F 9/00, H01M 8/04, H01M 8/04029

(54) **EXCAVATOR**

(30) Priority: 31.10.2023 JP 2023187061
(71) Applicant: KAWASAKI JUKOGYO KABUSHIKI KAISHA, Kobe-shi, Hyogo 650-8670 (JP)
(72) Inventor: TANAKA, Shinichiro, Hyogo 6508670 (JP); FUJIE, Masatsugu, Hyogo 6508670 (JP); MIYOSHI, Ryo, Hyogo 6508670 (JP)
(74) Representative: EIP
(86) International application number: PCT/JP2024/029125
(87) International publication number: WO 2025/094470

(57) **Abstract**

This excavator includes a slewing body rotatably disposed on a traveling device and includes: a hydrogen tank that stores hydrogen; a fuel cell that generates electric power by consuming the hydrogen in the hydrogen tank; and an electric pump device that is driven by the electric power generated by the fuel cell to discharge working fluid. The hydrogen tank and the electric pump device are housed in a housing space within the slewing body. The fuel cell is disposed in the slewing body at a distance from the housing space.

## Description

### Technical Field

The present disclosure relates to excavators including fuel cells.

### Background Art

Installing fuel cells in construction machines to achieve carbon neutrality has been studied. A known example of an excavator equipped with fuel cells is the hydraulic excavator disclosed in Patent Literature (PTL) 1. In the hydraulic excavator disclosed in PTL 1, fuel cells generate electric power using hydrogen supplied from tanks and oxygen in the atmosphere. The generated electric power is supplied to an electric pump device. As a result, working oil is discharged from the electric pump device, and when the working oil is supplied to a hydraulic actuator such as a boom cylinder, the hydraulic excavator operates.

### Citation List

### Patent Literature

PTL 1: Japanese Patent No. 7149447

### Summary of Invention

### Technical Problem

In the hydraulic excavator disclosed in PTL 1, the fuel cells generate substantial heat during power generation. Therefore, the heat generated by the fuel cells may affect the tanks and the electric pump device.

Thus, an object of the present disclosure is to provide an excavator capable of protecting a tank and an electric pump device from the effects of heat generated by a fuel cell.

### Solution to Problem

An excavator according to the present disclosure includes a slewing body rotatably disposed on a traveling device and includes: a hydrogen tank that stores hydrogen; a fuel cell that generates electric power by consuming the hydrogen in the hydrogen tank; and an electric pump device that is driven by the electric power generated by the fuel cell to discharge working fluid. The hydrogen tank and the electric pump device are housed in a housing space within the slewing body. The fuel cell is disposed in the slewing body at a distance from the housing space.

According to the present disclosure, the fuel cell is disposed in the slewing body at a distance from the housing space. Therefore, the temperature rise in the housing space due to heat generated by the fuel cell can be suppressed. Thus, the hydrogen tank and the electric pump device can be protected from the effects of heat emitted by the fuel cell.

An excavator according to the present disclosure includes a slewing body rotatably disposed on a traveling device and includes: a hydrogen tank that stores hydrogen; a fuel cell that generates electric power by consuming the hydrogen in the hydrogen tank; an electric pump device that is driven by the electric power generated by the fuel cell to discharge working fluid; and a radiator that cools the fuel cell. The hydrogen tank and the electric pump device are housed in a housing space within the slewing body. The slewing body includes a vent in a side surface on one side in a second direction. The radiator is disposed within the slewing body to face the vent. The radiator is disposed to overlap the hydrogen tank and the electric pump device as viewed in the second direction.

According to the present disclosure, the radiator is disposed to overlap the hydrogen tank and the electric pump device as viewed in the second direction. Therefore, the ambient air introduced through the vent can be delivered to both the hydrogen tank and the electric pump device; thus, both the hydrogen tank and the electric pump device can be cooled by the ambient air.

### Advantageous Effects of Invention

According to the present disclosure, a tank and an electric pump device can be protected from the effects of heat generated by a fuel cell.

The above object, other objects, features, and advantages of the present disclosure will be made clear by the following detailed explanation of preferred embodiments with reference to the attached drawings.

### Brief Description of Drawings

[Fig. 1] Fig. 1 is a perspective view of an excavator according to an embodiment of the present disclosure.
[Fig. 2] Fig. 2 is a plan view of the excavator of Fig. 1.
[Fig. 3] Fig. 3 is a right side view of the excavator of Fig. 1.
[Fig. 4] Fig. 4 is a left side view of the excavator of Fig. 1.
[Fig. 5] Fig. 5 is an enlarged right side view of the interior of a first cover body of the excavator of Fig. 2, as viewed from the right side.
[Fig. 6] Fig. 6 is an enlarged left side view of the interior of the first cover body of the excavator of Fig. 2, as viewed from the left side.
[Fig. 7] Fig. 7 is an enlarged right side view of the interior of a second cover body of the excavator of Fig. 2, as viewed from the right side.

### Description of Embodiments

Hereinafter, an excavator 1 according to an embodiment of the present disclosure will be described with reference to the aforementioned drawings. Note that the concept of directions mentioned in the following description is used for the sake of explanation; the orientations, etc., of elements according to the present disclosure are not limited to these directions. The excavator 1 described below is merely an embodiment of the present disclosure. Thus, the present disclosure is not limited to the embodiment and may be subject to addition, deletion, and alteration within the scope of the essence of the present disclosure.

### [Excavator]

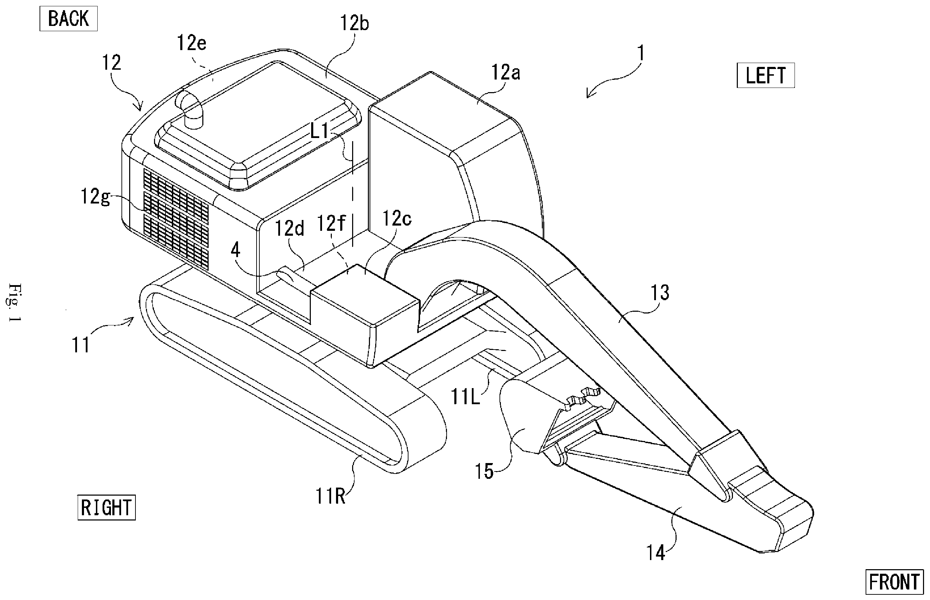

The excavator 1 illustrated in Fig. 1, which is an electric excavator, operates using hydrogen as a fuel. The excavator 1 includes a traveling device 11, a slewing body 12, a boom 13, an arm 14, and the bucket 15. The traveling device 11 includes, for example, a pair of crawlers 11L, 11R. Each of the crawlers 11L, 11R can be driven to move in various directions. The slewing body 12 is disposed on the traveling device 11 so as to be rotatable about a pivot axis L1 extending in the vertical direction. The boom 13, which is an example of the work equipment, is disposed on the slewing body 12 so as to be vertically pivotable. The arm 14 is disposed on a leading end portion of the boom 13 so as to be pivotable in the longitudinal direction, which is an example of the first direction. Furthermore, the bucket 15 is disposed on a leading end portion of the arm 14 so as to be longitudinally or vertically pivotable. Note that the longitudinal direction is, for example, the direction in which the boom 13 extends.

Furthermore, a hydraulic actuator not illustrated in the drawings is disposed in each of the traveling device 11, the slewing body 12, the boom 13, the arm 14, and the bucket 15. More specifically, traveling motors are disposed in the respective crawlers 11L, 11R of the traveling device 11. The traveling motors are supplied with working fluid to drive the crawlers 11L, 11R. This allows the traveling device 11 to move in various directions. Note that the working fluid is, for example, a liquid such as oil. Furthermore, a slewing motor not illustrated in the drawings is disposed in the slewing body 12. When supplied with the working fluid, the slewing motor causes the slewing body 12 to slew. Furthermore, cylinders not illustrated in the drawings are disposed on the boom 13, the arm 14, and the bucket 15. When supplied with the working fluid, the cylinders pivot the boom 13, the arm 14, and the bucket 15.

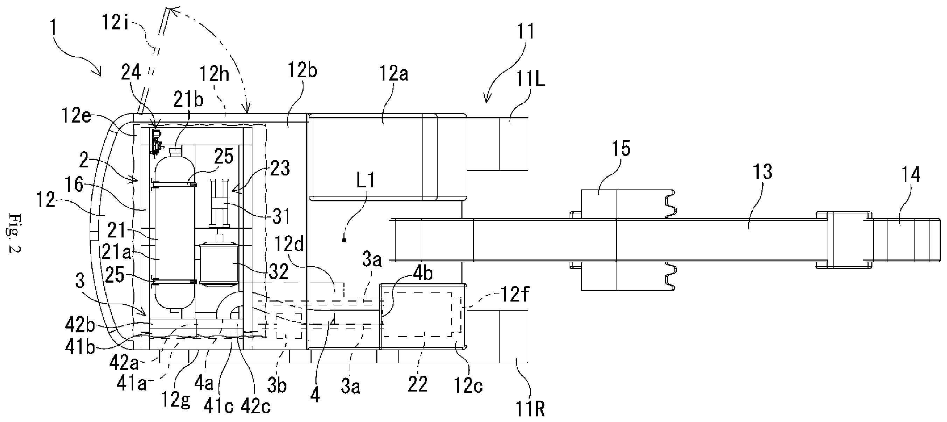

The slewing body 12 is configured as follows. Specifically, the slewing body 12 includes, for example, a cabin 12a, a first cover body 12b, a second cover body 12c, and a passage 12d, as illustrated in Fig. 2. The cabin 12a is configured to allow a driver or an operator to be seated therein. The cabin 12a is disposed, for example, in a front area of the slewing body 12, which is an example of one side in the first direction. More specifically, the cabin 12a is disposed forward of a hydrogen tank 21 and an electric pump device 23, which will be described in detail later. The boom 13 is disposed on the front portion of the slewing body 12 that is located at an intermediate position in the lateral direction, which is an example of the second direction. The cabin 12a is disposed on the left side, which is one side in the lateral direction, of the boom 13. Note that the positions of the boom 13 and the cabin 12a in the slewing body 12 are described on the premise that the boom 13 extends longitudinally.

The first cover body 12b is disposed in a rear area of the slewing body 12, which is an example of the other side in the first direction. In the present embodiment, the first cover body 12b extends over substantially the entire rear area of the slewing body 12 that is located rearward of the pivot axis L1. The first cover body 12b is disposed rearward of the cabin 12a in the slewing body 12. Furthermore, a first housing space 12e is formed within the first cover body 12b, and the slewing body 12 includes the first housing space 12e enclosed by the first cover body 12b. In the present embodiment, the first housing space 12e is formed rearward of the pivot axis L1.

The second cover body 12c is disposed in the front area of the slewing body 12. In the present embodiment, the second cover body 12c is disposed forward of the pivot axis L1 in the slewing body 12. More specifically, the second cover body 12c is disposed on the opposite side of the boom 13 from the cabin 12a. A second housing space 12f is formed within the second cover body 12c, and the slewing body 12 includes the second housing space 12f enclosed by the second cover body 12c. In the present embodiment, the second housing space 12f is formed forward of the pivot axis L1.

A passage 12d is disposed in a longitudinally intermediate portion of the slewing body 12. More specifically, the passage 12d is disposed between the first cover body 12b and the second cover body 12c in the longitudinal direction, which is an example of the first direction. The passage 12d is disposed so as to extend from the right side surface of the slewing body 12, which is located on the other side in the lateral direction. The passage 12d provides access, for example, for a service engineer to perform maintenance on various components disposed within the slewing body 12 (which is the first housing space 12e and the second housing space 12f in the present embodiment). With the passage 12d, the first cover body 12b and the second cover body 12c are formed to be longitudinally spaced apart from each other.

Furthermore, a frame 16 is disposed within the slewing body 12. More specifically, the frame 16 is disposed in the first housing space 12e. The hydrogen tank 21 and the electric pump device 23 are attached to the frame 16 as will be described in detail later. More specifically, the frame 16 is a laterally extending rectangular parallelepiped frame. The frame 16 is formed, for example, in a U-shape as viewed laterally, that is, in a side view, for example, In other words, the frame 16 is disposed within the first housing space 12e such that an opening portion of the frame 16 is oriented upward. In the present embodiment, the frame 16 is disposed in a longitudinally intermediate portion of the first housing space 12e. The hydrogen tank 21 and the electric pump device 23, which will be described in detail later, are housed within the frame 16.

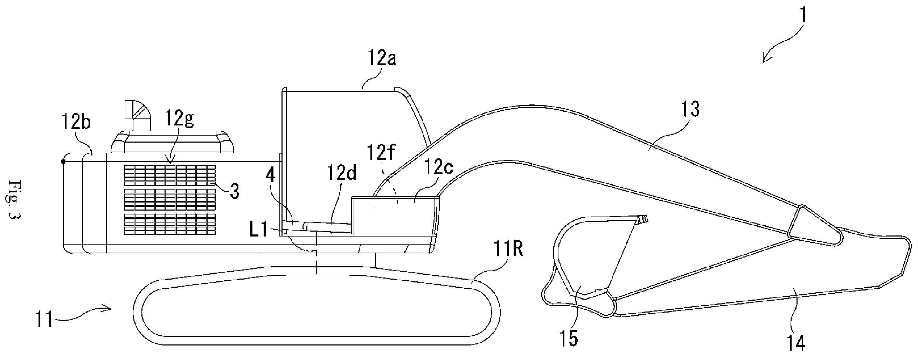

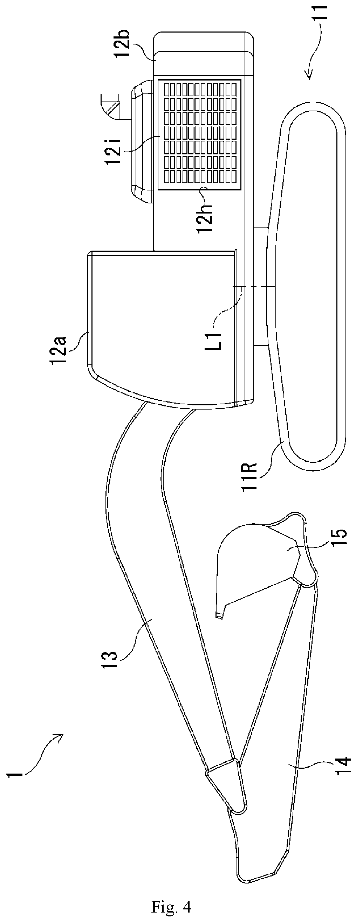

Furthermore, as illustrated in Fig. 3, a vent 12g is formed in a lateral side surface of the slewing body 12 (that is the right side surface thereof in the present embodiment). More specifically, the vent 12g is formed in the right side surface of the first cover body 12b. The vent 12g leads to the interior of the slewing body 12 (more specifically, the first housing space 12e). Therefore, air can be introduced into the first housing space 12e through the vent 12g. Furthermore, as illustrated in Fig. 4, an inspection opening 12h is formed in the other lateral side surface of the slewing body 12 (that is the left side surface thereof in the present embodiment). More specifically, the inspection opening 12h is formed in the left side surface of the first cover body 12b. The various components housed in the first housing space 12e can be inspected through the inspection opening 12h. Furthermore, an access door 12i is disposed at the inspection opening 12h to be movable between an open position and a closed position; when the access door 12i is open, the first housing space 12e can be seen through the inspection opening 12h.

Furthermore, the excavator 1 includes a hydraulic drive system 2, a cooling device 3, and a duct 4, as illustrated in Fig. 2. The hydraulic drive system 2 supplies the working fluid to each of the aforementioned hydraulic actuators to drive the hydraulic actuator. The hydraulic drive system 2 is disposed within the slewing body 12. The hydraulic drive system 2 includes a plurality of hydrogen tanks 21, a fuel cell 22, and the electric pump device 23. Note that in the present embodiment, the hydraulic drive system 2 includes two hydrogen tanks 21. The number of hydrogen tanks 21 included in the hydraulic drive system 2 is not limited to two and may alternatively be three or more or may alternatively be one. The hydraulic drive system 2 further includes a supply system unit 24 and a multi-control valve (not illustrated in the drawings).

### [Hydrogen Tank]

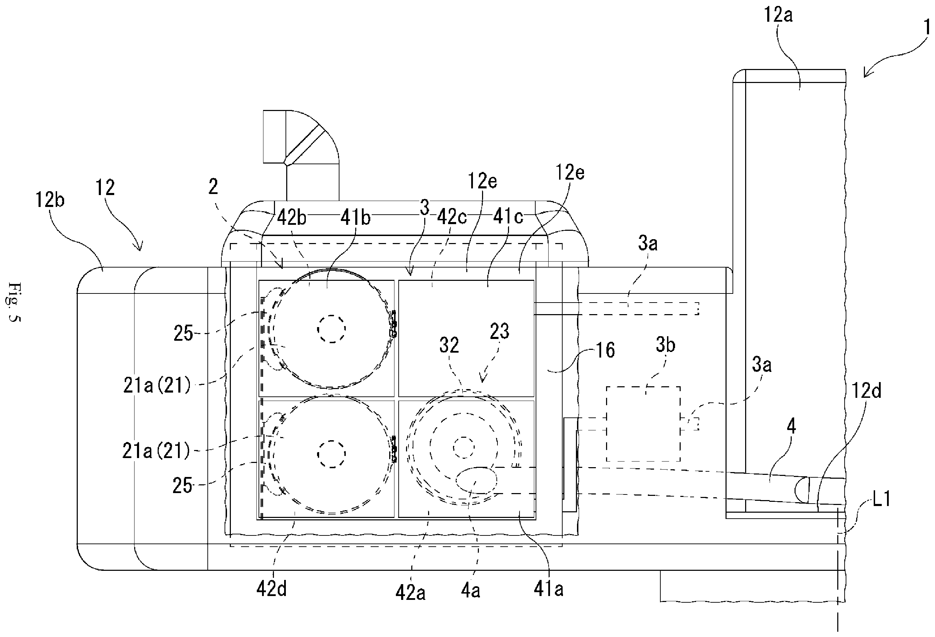

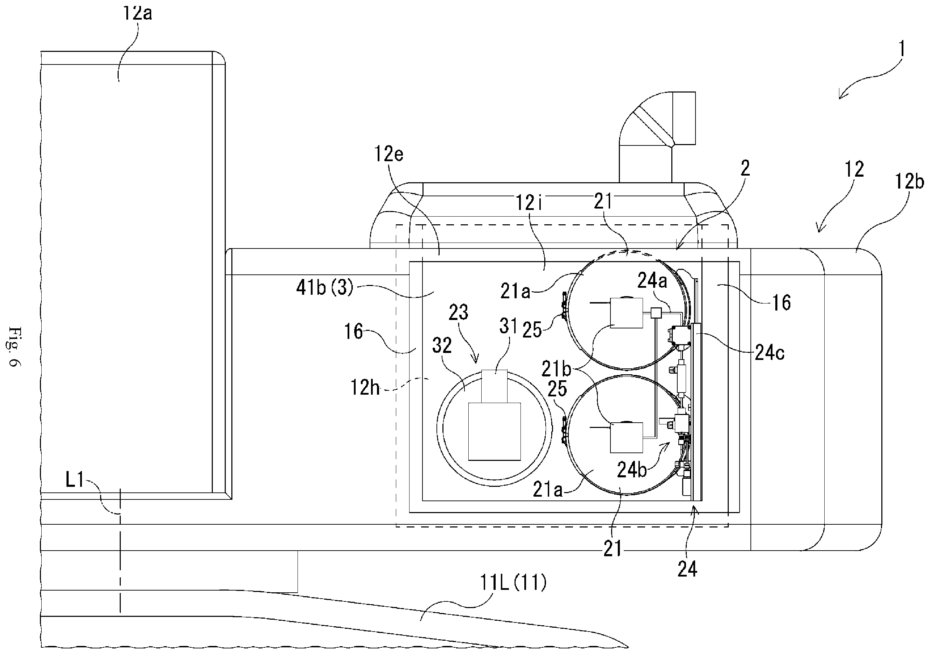

The two hydrogen tanks 21 illustrated in Fig. 5 store hydrogen to be supplied to the fuel cell 22 (refer to Fig. 2). The two hydrogen tanks 21 are connected to the fuel cell 22 via the supply system unit 24, which will be described in detail later. The two hydrogen tanks 21, which are connected to the fuel cell 22 via the supply system unit 24 although not illustrated in the drawings, supply hydrogen to the fuel cell 22. In the present embodiment, the hydrogen tank 21 includes a tank body 21a and a tank valve 21b, as illustrated in Fig. 6. The tank body 21a is formed, for example, in the shape of a circular cylinder elongated in the axial direction and stores hydrogen therein. The axial direction herein is the direction in which the axis of the tank body 21a (in other words, the hydrogen tank 21) extends. The tank valve 21b is disposed at the port of the tank body 21a to seal the tank body 21a. Furthermore, the tank valve 21b controls the flow of hydrogen during filling and delivery of hydrogen to and from the tank body 21a.

The two hydrogen tanks 21 are arranged within the slewing body 12 as follows, for example. Specifically, each of the hydrogen tanks 21 is housed in the first housing space 12e, as illustrated in Fig. 2. More specifically, each of the hydrogen tanks 21 is housed within the frame 16 located in the first housing space 12e. The two hydrogen tanks 21 are vertically arranged in the rear area within the frame 16. The hydrogen tanks 21 are disposed such that the respective axes thereof (specifically, the respective axes of the tank bodies 21a) are parallel to each other and extend laterally. In the hydrogen tank 21, the tank valve 21b is positioned on the left side, as illustrated in Fig. 6. Furthermore, the two hydrogen tanks 21 are attached to the frame 16 via mounting members 25 and secured to the slewing body 12.

The respective tank valves 21b of the two hydrogen tanks 21 are disposed on the inspection opening 12h side, as illustrated in Fig. 2. In other words, the tank valves 21b are oriented toward the inspection opening 12h. Meanwhile, the right-hand-side portions of the two hydrogen tanks 21 are positioned to face the vent 12g.

### [Supply System Unit]

The supply system unit 24 illustrated in Fig. 6 controls the flow of hydrogen supplied from the hydrogen tank 21 to the fuel cell 22. The supply system unit 24 is disposed within the slewing body 12 on the inspection opening 12h side relative to the hydrogen tank 21. More specifically, the supply system unit 24 is disposed adjacent to the tank valve 21b. As a result, the supply system unit 24 is disposed within the slewing body 12 on the inspection opening 12h side relative to the hydrogen tank 21. The supply system unit 24 is connected to the fuel cell 22 via a pipe (not illustrated in the drawings), and hydrogen in the hydrogen tank 21 is supplied to the fuel cell 22 via the supply system unit 24 and the pipe (not illustrated in the drawings). Next, the configuration of the supply system unit 24 will be described in more detail.

The supply system unit 24 includes a pipe member 24a. The pipe member 24a is connected to each of the two hydrogen tanks 21. The hydrogen drained from the hydrogen tanks 21 flows through the pipe member 24a. The supply system unit 24 further includes at least one valve. In the present embodiment, the supply system unit 24 includes a plurality of valves, and the plurality of valves constitute a valve group 24b. Each valve of the valve group 24b regulates the hydrogen supply from the hydrogen tank 21 to the fuel cell 22. Examples of the plurality of valves include a high-pressure reducing valve, a shutoff valve, a low-pressure reducing valve, and a manual valve. Each valve of the valve group 24b depressurizes the high-pressure hydrogen stored in the hydrogen tank 21 to a low pressure (for example, 100 kPa) and supplies the hydrogen to the fuel cell 22. The pipe member 24a and each valve of the valve group 24b are integrated into a unit by being mounted on the mounting plate 24c, for example, and this unit is mounted on the frame 16 via the mounting plate 24c.

### [Fuel Cell]

The fuel cell 22 illustrated in Fig. 2 generates electric power by consuming the hydrogen stored in the hydrogen tank 21. More specifically, the fuel cell 22 generates electric power using the hydrogen supplied from the hydrogen tank 21 and the oxygen extracted from ambient air. In the present embodiment, a compression machine not illustrated in the drawings, for example, a compressor, supplies compressed air to the fuel cell 22. Subsequently, the fuel cell 22 generates electric power using oxygen and hydrogen contained in the compressed air. The fuel cell 22 is electrically connected to the electric pump device 23 and supplies the generated electric power to the electric pump device 23. Accordingly, the electric pump device 23 is driven. Note that the fuel cell 22 may be a single cell or may have a stack structure including stacked cells.

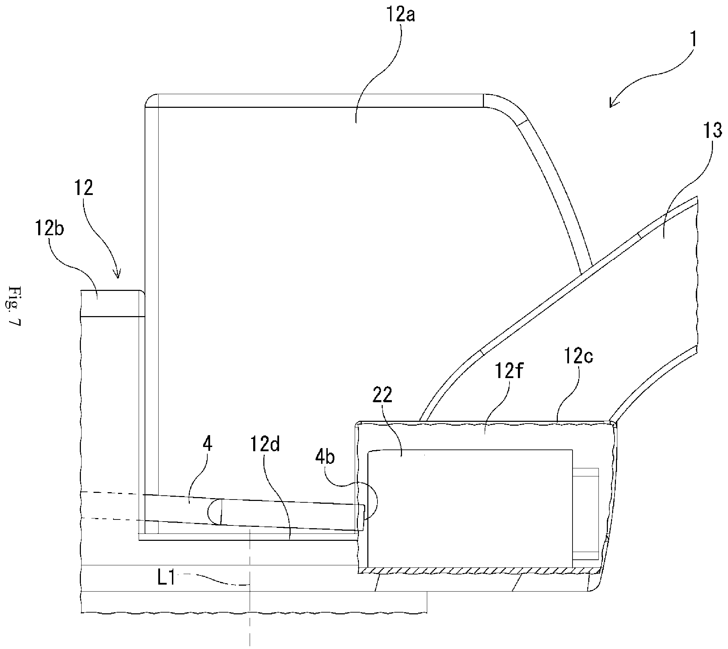

The fuel cell 22 is disposed within the slewing body 12 at a distance from the first housing space 12e. More specifically, in addition to the hydrogen tank 21, the electric pump device 23 is housed in the first housing space 12e, as will be described in detail later. Thus, the fuel cell 22 is disposed at a distance from the hydrogen tank 21 and the electric pump device 23. In the present embodiment, the fuel cell 22 is housed in the second housing space 12f, as also illustrated in Fig. 7. In other words, the fuel cell 22 is disposed forward of the pivot axis L1. In the present embodiment, the fuel cell 22 is placed forward of the first cover body 12b. The fuel cell 22 is disposed at a position overlapping with the cabin 12a in the second direction. By being housed in the second housing space 12f, the fuel cell 22 is disposed at a distance from the hydrogen tank 21 and the electric pump device 23 such that the passage 12d as well as the two cover bodies 12b, 12c are interposed therebetween.

### [Electric Pump Device]

The electric pump device 23 illustrated in Fig. 2 is an electrically driven hydraulic pump device. With the electric power supplied from the fuel cell 22, the electric pump device 23 is driven to discharge the working fluid. More specifically, the electric pump device 23 includes a hydraulic pump 31 and an electric motor 32. The hydraulic pump 31 is rotatably driven to discharge the working fluid. The hydraulic pump 31 is, for example, a tandem swash plate piston pump. Note that the hydraulic pump 31 may alternatively be a single-unit swash plate piston pump or may alternatively be another type of hydraulic pump such as an axial piston pump or a gear pump. The electric motor 32 is coupled to the hydraulic pump 31. The electric motor 32 receives the electric power supplied thereto, and rotatably drives the hydraulic pump 31. Accordingly, the hydraulic pump 31 discharges the working fluid. In the present embodiment, the hydraulic pump 31 and the electric motor 32 share a drive shaft (not illustrated in the drawings), and the hydraulic pump 31 and the electric motor 32 may be arranged in a straight line.

The electric pump device 23 configured as described above is disposed within the slewing body 12 as follows, for example. Specifically, the electric pump device 23 is housed in the first housing space 12e. More specifically, the electric pump device 23 is housed within the frame 16 located in the first housing space 12e. In the frame 16, the electric pump device 23 is disposed forward of the hydrogen tank 21. Note that the positions of the electric pump device 23 and the hydrogen tank 21 may be longitudinally reversed within the frame 16. The electric pump device 23 is disposed to be longitudinally spaced apart from the two hydrogen tanks 21. Furthermore, the electric pump device 23 is housed within the frame 16 such that the electric pump device 23 and the hydrogen tanks 21 extend parallel to each other. In other words, the electric pump device 23 is disposed such that the hydraulic pump 31 and the electric motor 32 are laterally arranged. Furthermore, in the present embodiment, the electric pump device 23 is disposed within the slewing body 12 such that the electric motor 32 is positioned to the right of the hydraulic pump 31. In other words, the electric pump device 23 is disposed such that the electric motor 32 is located closer to the fuel cell 22.

Furthermore, the electric pump device 23 is connected to the multi-control valve (not illustrated in the drawings). More specifically, the electrical pump device 23 is connected to each hydraulic actuator (not illustrated in the drawings) via the multi-control valve. The multi-control valve can control the flow of the working fluid discharged from the electric pump device 23 and supply the working fluid to each hydraulic actuator. Accordingly, the traveling device 11, the slewing body 12, the boom 13, the arm 14, and the bucket 15 can be actuated.

### [Cooling Device]

The cooling device 3 cools heat sources disposed within the slewing body 12. Examples of such heat sources include the fuel cell 22. In the present embodiment, the heat sources further include the working fluid and the compressor in addition to the fuel cell 22. The cooling device 3 includes a radiator core 41a and a cooling fan 42a. In the present embodiment, the cooling device 3 further includes an oil cooler core 41b and a compressor cooler core 41c. Furthermore, the cooling device 3 includes cooling fans 42b to 42d. Note that the number of cores 41a to 41c, which are heat exchangers, is not limited to three, provided that at least the radiator core 41a is included. Furthermore, the cooling device 3 may include an air-conditioner heat exchanger and a converter heat exchanger, along with said cores 41a to 41c. Similarly, the number of cooling fans 42a to 42d is not limited to four, provided that at least the cooling fan 42a is included. Furthermore, the cooling device 3 may include one integrated cooling fan assembly including a plurality of cooling fans.

The radiator core 41a cools the fuel cell 22. More specifically, a coolant for cooling the fuel cell 22 flows through the radiator core 41a. The radiator core 41a exchanges heat between the coolant flowing therein and a fluid such as ambient air or a refrigerant, thereby cooling the coolant. In the present embodiment, the radiator core 41a is an air-cooled heat exchanger and exchanges heat between the coolant flowing therein and ambient air, thereby cooling the coolant. More specifically, the radiator core 41a is connected to the fuel cell 22 via a cooling pipe 3a. The cooling pipe 3a is disposed such that the coolant circulates between the radiator core 41a and the fuel cell 22. Furthermore, a circulation pump 3b is disposed on the cooling pipe 3a. The circulation pump 3b causes the coolant to circulate between the radiator core 41a and the fuel cell 22. Accordingly, the circulating coolant absorbs heat at the fuel cell 22, and the radiator core 41a dissipates the absorbed heat. In this manner, the radiator core 41a cools the fuel cell 22. Note that the radiator core 41a may be a water-cooled heat exchanger.

The oil cooler core 41b cools the working fluid. More specifically, the working fluid drained from the multi-control valve to a working fluid tank (both of which are not illustrated in the drawings) flows through the oil cooler core 41b. The oil cooler core 41b exchanges heat between the working fluid flowing therein and a fluid such as ambient air or a refrigerant, thereby cooling the working fluid. In the present embodiment, the oil cooler core 41b is an air-cooled heat exchanger and exchanges heat between the working fluid flowing therein and ambient air, thereby cooling the working fluid. Thus, at the oil cooler core 41b, the working fluid dissipates the heat absorbed at the electric pump device 23 and the multi-control valve. Note that the oil cooler core 41b may be a water-cooled heat exchanger.

The compressor cooler core 41c cools the compressor (not illustrated in the drawings). More specifically, the coolant for cooling the compressor flows through the compressor cooler core 41c. The compressor cooler core 41c exchanges heat between the coolant flowing therein and a fluid such as ambient air or a refrigerant, thereby cooling the coolant. In the present embodiment, the compressor cooler core 41c is an air-cooled heat exchanger and exchanges heat between the coolant flowing therein and ambient air, thereby cooling the coolant. More specifically, the compressor cooler core 41c is connected to the compressor by a cooling pipe not illustrating in the drawings. The cooling pipe is disposed such that the coolant circulates between the compressor cooler core 41c and the compressor. Furthermore, a circulation pump (not illustrated in the drawings) is disposed on the cooling pipe. The circulation pump causes the coolant to circulate between the compressor cooler core 41c and the compressor. Accordingly, the circulating coolant absorbs heat at the compressor, and the compressor cooler core 41c dissipates the absorbed heat. Note that the compressor cooler core 41c may be a water-cooled heat exchanger.

The four cooling fans 42a to 42d introduce ambient air into the slewing body 12 through the vent 12g. Furthermore, the four cooling fans 42a to 42d direct the introduced ambient air to the cores 41a to 41c, thereby cooling the coolant and the working fluid. In the present embodiment, the cooling fans 42a to 42d draw ambient air into the slewing body 12 through the vent 12g to direct air to the cores 41a to 41c so that the coolant and the working fluid are further cooled.

The cooling device 3 configured as described above is disposed in the slewing body 12 as follows. Specifically, the cooling device 3 is disposed within the slewing body 12 so as to face the vent 12g. More specifically, as illustrated in Fig. 5, the cooling device 3 is disposed to overlap the hydrogen tank 21 and the electric pump device 23 as viewed laterally. In the present embodiment, the cooling device 3 is disposed between the vent 12g and the two hydrogen tanks 21. Furthermore, the cooling device 3 is also disposed between the vent 12g and the electric pump device 23. As a result, the cooling device 3 can supply airflow from the cooling fans 42a to 42d to the hydrogen tank 21 and the electric pump device 23. While the cooling device 3 overlaps the entirety of the hydrogen tank 21 and the electric pump device 23 in the present embodiment, the cooling device 3 may partially overlap the hydrogen tank 21 and the electric pump device 23. Note that the cooling device 3 does not necessarily need to be disposed between the vent 12g and each of the hydrogen tank 21 and the hydrogen tank 21, provided that the cooling device 3 faces the vent 12g.

More specifically, in the cooling device 3, the cores 41a to 41c are disposed so as to face the vent 12g. In the present embodiment, the cores 41a to 41c are arranged in the longitudinal and vertical directions such that the principal surfaces thereof are oriented toward the vent 12g. The cooling fans 42a to 42d are disposed behind the cores 41a to 41c, that is, on the opposite side of the cores 41a to 41c from the vent 12g. Note that the cooling fans 42a to 42d may be disposed in front of the cores 41a to 41c, that is, between the cores 41a to 41c and the vent 12g. Similar to the cores 41a to 41c, the cooling fans 42a to 42d are arranged in the longitudinal and vertical directions. More specifically, the cooling fans 42a to 42d are disposed to extend in a direction perpendicular to the direction in which the hydrogen tank 21 and the electric pump device 23 extend. In other words, the rotation axis of each of the cooling fans 42a to 42d extends in the direction in which the hydrogen tank 21 and the electric pump device 23 extend. Note that the direction of extension includes a direction inclined at ±30 degrees with respect to the direction in which the rotation axis extends. As a result, cooling air can be supplied from the cooling fans 42a to 42d to the hydrogen tank 21 and the electric pump device 23 in parallel with the direction of extension thereof. The hydrogen tank 21 and the electric pump device 23 are arranged parallel to and spaced apart from each other, allowing the cooling air to pass between the hydrogen tank 21 and the electric pump device 23. Note that being parallel includes one of the hydrogen tank 21 and the electric pump device 23 being inclined at ±30 degrees with respect to the other. Therefore, the hydrogen tank 21 and the electric pump device 23 can be efficiently cooled.

### [Duct]

The duct 4 connects the leeward side of the cooling device 3 and the second housing space 12f. Accordingly, the duct 4 guides, to the second housing space 12f, the ambient air supplied from the cooling device 3, to cool the fuel cell 22 using the ambient air. More specifically, the duct 4 is provided to extend between the two housing spaces 12e, 12f. In other words, the duct 4 extends from the first housing space 12e to the second housing space 12f. The duct 4 has one end portion positioned within the first cover body 12b (specifically, the first housing space 12e) and the other end portion within the second cover body 12c (specifically, the second housing space 12f).

The duct 4 is disposed adjacent to the cooling device 3. More specifically, the duct 4 is disposed on the leeward side of and adjacent to the cooling device 3. The duct 4 is disposed, for example, to extend toward the cooling device 3. In the present embodiment, the duct 4 is disposed such that an opening (hereinafter referred to as "the suction port") 4a at one end thereof is oriented toward the cooling fan 42a of the cooling device 3. Note that the suction port of the duct 4 does not necessarily need to be oriented toward the cooling fan 42a and may alternatively be oriented toward the other cooling fans 42b to 42d. This allows the cooling device 3 to supply, into the duct 4, the ambient air introduced through the vent 12g. Meanwhile, an opening at the other end (hereinafter referred to "the drain port") 4b is oriented toward the fuel cell 22. Thus, the duct 4 blows the introduced ambient air toward the fuel cell 22 to cool the fuel cell 22.

### [Operation of Excavator]

In the excavator 1, the hydraulic drive system 2 operates as follows. Specifically, in the hydraulic drive system 2, hydrogen is supplied from the hydrogen tank 21 to the fuel cell 22 via the supply system unit 24. Accordingly, the fuel cell 22 generates electric power using the hydrogen and the oxygen contained in the atmosphere. The generated electric power is supplied from the fuel cell 22 to the electric pump device 23. More specifically, the generated electric power is supplied from the fuel cell 22 to the electric motor 32. Accordingly, the electric motor 32 drives the hydraulic pump 31, and the working fluid is discharged. When the working fluid is supplied to each hydraulic actuator via the multi-control valve, the hydraulic actuator is driven. Thus, the excavator 1 is actuated.

In the excavator 1 configured as described above, significant heat is generated during power generation of the fuel cell 22, and the fuel cell 22 is cooled using the cooling device 3 and the like. Specifically, the circulation pump 3b delivers the coolant from the cooling device 3 to the fuel cell 22 through the cooling pipe 3a. The coolant is delivered to the fuel cell 22 and absorbs the heat generated at the fuel cell 22. Subsequently, the coolant is brought back to the radiator core 41a through the cooling pipe 3a. In the radiator core 41a, the coolant is cooled by effecting heat exchange between the coolant and the ambient air introduced through the vent 12g. Furthermore, when the cooling fans 42a to 42d are driven, a larger amount of ambient air is introduced through the vent 12g and directed to the radiator core 41a. Thus, the coolant is further cooled. Subsequently, the cooled coolant is delivered from the cooling device 3 to the fuel cell 22 using the circulation pump 3b. In this manner, the fuel cell 22 is cooled by the coolant in the excavator 1.

Furthermore, in the excavator 1, the ambient air introduced through the vent 12g is delivered to the second housing space 12f via the duct 4. The delivered ambient air then impinges on the fuel cell 22. This enables cooling of the fuel cell 22. Moreover, in the excavator 1, the fuel cell 22 is disposed at a distance from the hydrogen tank 21 and the electric pump device 23. Therefore, the hydrogen tank 21 and the electric pump device 23 are protected from the effects of heat emitted from the fuel cell 22.

Furthermore, in the excavator 1, the working fluid and the compressor are cooled using the cooling device 3. Specifically, in the excavator 1, when the working fluid is brought to the oil cooler core 41b of the cooling device 3, the oil cooler core 41b exchanges heat between the working fluid and the ambient air introduced through the vent 12g. Thus, the working fluid is cooled. Moreover, when the cooling fans 42a to 42d are driven, a larger amount of ambient air can be introduced through the vent 12g and directed to the oil cooler core 41b. Thus, the working fluid is further cooled.

Furthermore, in the excavator 1, the coolant is delivered from the compressor cooler core 41c to the compressor. Accordingly, the coolant absorbs heat emitted from the compressor. Subsequently, the coolant is brought back to the compressor cooler core 41c. The compressor cooler core41c exchanges heat between the coolant and the ambient air introduced through the vent 12g. Moreover, when the cooling fans 42a to 42d are driven, a larger amount of ambient air can be introduced through the vent 12g and directed to 42a to 42d. Thus, the coolant to be supplied to the compressor is further cooled. Subsequently, the cooled coolant is delivered from the compressor cooler core 41c to the compressor. In this manner, the compressor is cooled by the coolant in the excavator 1.

In the excavator 1 according to the present embodiment, the fuel cell 22 is disposed in the slewing body 12 at a distance from the first housing space 12e. Therefore, the temperature rise in the first housing space 12e due to heat generated by the fuel cell 22 can be suppressed. Thus, the hydrogen tank 21 and the electric pump device 23 can be protected from the effects of heat emitted by the fuel cell 22. Moreover, the fuel cell 22 and the electric pump device 23 can be properly cooled.

Furthermore, in the excavator 1 according to the present embodiment, the hydrogen tank 21 and the electric pump device 23 are housed in the first housing space 12e enclosed by the first cover body 12b, and the fuel cell 22 is housed in the second housing space 12f enclosed by the second cover body 12c. Since each of the hydrogen tank 21 and the electric pump device 23 and the fuel cell 22 are housed in the housing spaces 12e, 12f enclosed by the different cover bodies 12b, 12c, the hydrogen tank 21 and the electric pump device 23 can be further protected from the effects of heat emitted by the fuel cell 22.

Furthermore, in the excavator 1 according to the present embodiment, the passage 12d is disposed between the first cover body 12b and the second cover body 12c. Therefore, since the passage 12d is disposed between the two housing spaces 12e, 12f, the fuel cell 22 can be spaced further apart from the hydrogen tank 21 and the electric pump device 23. Thus, the hydrogen tank 21 and the electric pump device 23 can be further protected from the effects of heat emitted by the fuel cell 22.

Furthermore, in the excavator 1 according to the present embodiment, the fuel cell 22 is disposed in a front area of the slewing body 12 where the boom 13 is disposed, and the first housing space 12e is formed in a rear area of the slewing body 12. Therefore, within the slewing body 12, the fuel cell 22 and the first housing space 12e can be spaced further apart. Thus, the hydrogen tank 21 and the electric pump device 23 can be further protected from the effects of heat emitted by the fuel cell 22.

Furthermore, in the excavator 1 according to the present embodiment, the fuel cell 22 is disposed on the opposite side of the boom 13 from the cabin 12a in the lateral direction. Therefore, the fuel cell 22 can be disposed at a distance from the first housing space 12e while the space within the slewing body 12 is effectively used.

Furthermore, in the excavator 1 according to the present embodiment, the slewing body 12 includes the duct 4, which connects the leeward side of the cooling device 3 and the second housing space 12f. Therefore, the air introduced through the vent 12g can be delivered by the cooling device 3 to the fuel cell 22 via the duct 4. This enables cooling of the fuel cell 22.

Furthermore, in the excavator 1 according to the present embodiment, the cooling device 3 is disposed to overlap the hydrogen tank 21 and the electric pump device 23 as viewed laterally. Therefore, the introduced ambient air can be delivered to both the hydrogen tank 21 and the electric pump device 23; thus, both the hydrogen tank 21 and the electric pump device 23 can be cooled by the introduced ambient air.

Furthermore, in the excavator 1 according to the present embodiment, the hydrogen tank 21 and the electric pump device 23 are arranged to be longitudinally spaced apart from each other. This allows the introduced ambient air to pass between the hydrogen tank 21 and the electric pump device 23. In other words, obstruction of the flow of the ambient air by the hydrogen tank 21 and the electric pump device 23 can be minimized. As a result, thermal accumulation within the first housing space 12e can be mitigated. Thus, the cooling performance of the hydrogen tank 21 and the electric pump device 23 can be improved.

Furthermore, in the excavator 1 according to the present embodiment, the slewing body 12 includes, in the right side surface, the vent 12g leading to the first housing space 12e. The hydrogen tank 21 and the electric pump device 23 are longitudinally arranged when disposed in the first housing space 12e. This allows the ambient air introduced through the vent 12g to flow between the hydrogen tank 21 and the electric pump device 23. This enables further cooling of the electric pump device 23.

Furthermore, in the excavator 1 according to the present embodiment, the slewing body 12 includes the inspection opening 12h, and the supply system unit 24 is disposed on the inspection opening 12h side relative to the hydrogen tank 21. Therefore, since the supply system unit 24 is disposed on the inspection opening 12h side, the maintainability of the supply system unit 24 can be improved.

### <Other Embodiments>

While each of the two hydrogen tanks 21 and the electric pump device 23 and the fuel cell 22 are housed in the different cover bodies 12b, 12c in the excavator 1 according to the present embodiment, these may alternatively be housed in a single cover body. In this case, two housing spaces 12e, 12f are formed within the single cover body. Inside the single cover body, the two housing spaces 12e, 12f may be physically spaced apart by a partition or the like or may be separated by a distance. In other words, it is sufficient that that the fuel cell 22 be disposed at a distance from the first housing space 12e. Furthermore, while the passage 12d is formed between the two cover bodies 12b, 12c in the excavator 1 according to the present embodiment, the passage 12d does not necessarily need to be formed. For example, the excavator 1 includes only one cover body, and the passage 12d is formed forward of the cover body. In this case, within the cover body, the space rearward of the cabin 12a defines the first housing space, while the space to the right of the cabin 12a defines the second housing space. Moreover, the fuel cell 22 does not necessarily need to be located to the right of the boom 13 (in other words, on the opposite side of the boom 13 from the cabin 12a) and may alternatively be located to the left or rearward of the boom 13.

While the vent 12g is formed in the right side surface of the excavator 1 according to the present embodiment, this may alternatively be formed in the left side surface of the excavator or may alternatively be formed in both the left and right side surfaces of the excavator. The cooling device 3 does not necessarily need to overlap both the hydrogen tank 21 and the electric pump device 23 as viewed laterally; the cooling device 3 does not need to overlap at least one or both of the hydrogen tank 21 and the electric pump device 23 as viewed laterally. Furthermore, while the excavator 1 according to the present embodiment includes the duct 4, the duct 4 does not need to be included. For example, a vent leading to the second housing space 12f may be formed in the side or front surface of the excavator 1 so that the ambient air can be introduced into the second housing space 12f through this vent.

While the hydrogen tank 21 and the electric pump device 23 are arranged in the first direction in the excavator 1 according to the present embodiment, these may alternatively be arranged in the second direction. Furthermore, while the hydrogen tank 21 and the electric pump device 23 are disposed to be spaced apart from each other in the first direction in the excavator 1 according to the present embodiment, these may alternatively be disposed to overlap each other in the first direction. Moreover, while the supply system unit 24 and the tank valve 21b are disposed on the inspection opening 12h side in the excavator 1 according to the present embodiment, these may alternatively be disposed on the vent 12g side.

In the excavator 1 according to the present embodiment, the plurality of actuators for driving the traveling device 11, the slewing body 12, the boom 13, the arm 14, and the bucket 15 are not necessarily required to all be hydraulic actuators. It is sufficient that at least one of the plurality of actuators be a hydraulic actuator, and the rest may be electric actuators.

### <Exemplary Embodiments>

An excavator according to the first aspect includes a slewing body rotatably disposed on a traveling device and includes: a hydrogen tank that stores hydrogen; a fuel cell that generates electric power by consuming the hydrogen in the hydrogen tank; and an electric pump device that is driven by the electric power generated by the fuel cell to discharge working fluid. The hydrogen tank and the electric pump device are housed in a housing space within the slewing body. The fuel cell is disposed in the slewing body at a distance from the housing space.

According to this aspect, the fuel cell is disposed in the slewing body at a distance from the housing space. Therefore, the temperature rise in the housing space due to heat generated by the fuel cell can be suppressed. Thus, the hydrogen tank and the electric pump device can be protected from the effects of heat emitted by the fuel cell.

An excavator according to the second aspect is the excavator according to the first aspect in which the slewing body includes, as the housing space, a first housing space enclosed by a first cover body and a second housing space located at a distance from the first housing space and enclosed by a second cover body different from the first cover body, and the fuel cell is housed in the second housing space.

According to this aspect, since the hydrogen tank, the electric pump device, and the fuel cell are housed in the housing spaces enclosed by the different cover bodies, the hydrogen tank and the electric pump device can be further protected from the effects of heat emitted by the fuel cell.

An excavator according to the third aspect is the excavator according to the second aspect in which the slewing body includes a passage, and the passage is disposed between the first cover body and the second cover body.

According to this aspect, since the passage is disposed between the two housing spaces, the fuel cell can be spaced further apart from the hydrogen tank and the electric pump device. Thus, the hydrogen tank and the electric pump device can be further protected from the effects of heat emitted by the fuel cell.

An excavator according to the fourth aspect is the excavator according to any one of the first to third aspects in which working equipment is disposed on the slewing body on one side in a first direction, the fuel cell is disposed on the one side in the first direction relative to a pivot axis of the slewing body, and the housing space is formed on the other side in the first direction relative to the pivot axis of the slewing body.

According to this aspect, the fuel cell is disposed on the one side in the first direction in the slewing body on which the work equipment is disposed, and the housing space is formed on the other side in the first direction in the slewing body. Therefore, in the slewing body, the fuel cell and the housing space can be spaced further apart. Thus, the hydrogen tank and the electric pump device can be further protected from the effects of heat emitted by the fuel cell.

An excavator according to the fifth aspect is the excavator according to the fourth aspect in which the slewing body includes a cabin, and the fuel cell is disposed on an opposite side of the work equipment from the cabin in a second direction perpendicular to the first direction.

According to this aspect, the fuel cell is disposed on the opposite side of the work equipment from the cabin in the second direction. Therefore, the fuel cell can be disposed at a distance from the housing space while the space within the slewing body is effectively used.

An excavator according to the sixth aspect is the excavator according to the second or third aspect that further includes: a cooling device that cools the fuel cell; and a duct, and in which the slewing body includes a vent in a side surface in a second direction perpendicular to a first direction, the cooling device is disposed within the slewing body to face the vent, and the duct places a leeward side of the cooling device and the second housing space in communication.

According to this aspect, the slewing body further includes the duct that places the leeward side of the cooling device and the second housing space in communication. Therefore, the air introduced through the vent can be delivered by the cooling fan to the fuel cell via the duct. This enables cooling of the fuel cell.

An excavator according to the seventh aspect is the excavator according to the second or third aspect that further includes a cooling device that cools the fuel cell, and in which the slewing body includes a vent in a side surface in a second direction perpendicular to a first direction, and the cooling device is disposed within the slewing body to face the vent and overlap the hydrogen tank and the electric pump device as viewed in the second direction.

According to this aspect, the cooling device is disposed to overlap the hydrogen tank and the electric pump device as viewed in the second direction. Therefore, the introduced ambient air can be delivered to both the hydrogen tank and the electric pump device; thus, both the hydrogen tank and the electric pump device can be cooled by the introduced ambient air.

An excavator according to the eighth aspect is the excavator according to the seventh aspect in which the hydrogen tank and the electric pump device are arranged to be spaced apart from each other in the first direction.

According to this aspect, the hydrogen tank and the electric pump device are arranged to be spaced apart from each other in the first direction. This allows the introduced ambient air to pass between the hydrogen tank and the electric pump device. In other words, obstruction of the flow of the ambient air by the hydrogen tank and the electric pump device can be minimized. As a result, thermal accumulation within the housing space can be mitigated. Thus, the cooling performance of the hydrogen tank and the electric pump device can be improved.

An excavator according to the ninth aspect is the excavator according to any one of the first to eighth aspects in which the slewing body includes, in a side surface in a second direction perpendicular to a first direction, a vent leading to the housing space, and the hydrogen tank and the electric pump device are arranged in the first direction in the housing space.

According to this aspect, the slewing body includes, in the side surface on one side in the second direction perpendicular to the first direction, the vent leading to the housing space. Furthermore, the hydrogen tank and the electric pump device are arranged in the first direction in the housing space. This allows the ambient air introduced through the vent to flow between the hydrogen tank and the electric pump device. This enables further cooling of the electric pump device.

An excavator according to the tenth aspect is the excavator according to any one of the first to ninth aspects that further includes: a valve that controls a flow of the hydrogen supplied from the hydrogen tank to the fuel cell, and in which the slewing body includes a vent in a side surface in a second direction perpendicular to a first direction, and an inspection opening in another side surface in the second direction, the vent and the inspection opening lead to the housing space, and the valve is disposed proximate to the inspection opening with respect to the hydrogen tank.

According to this aspect, the slewing body includes the inspection opening, and the supply system unit is disposed on the inspection opening side of the hydrogen tank. Therefore, since the supply system unit is disposed on the inspection opening side, the maintainability of the supply system unit can be improved.

An excavator according to the eleventh aspect includes a slewing body rotatably disposed on a traveling device and includes: a hydrogen tank that stores hydrogen; a fuel cell that generates electric power by consuming the hydrogen in the hydrogen tank; an electric pump device that is driven by the electric power generated by the fuel cell to discharge working fluid; and a radiator that cools the fuel cell. The hydrogen tank and the electric pump device are housed in a housing space within the slewing body. The slewing body includes a vent in a side surface on one side in a second direction. The radiator is disposed within the slewing body to face the vent. The radiator is disposed to overlap the hydrogen tank and the electric pump device as viewed in the second direction.

According to this aspect, the radiator is disposed to overlap the hydrogen tank and the electric pump device as viewed in the second direction. Therefore, the ambient air introduced through the vent can be delivered to both the hydrogen tank and the electric pump device; thus, both the hydrogen tank and the electric pump device can be cooled by the ambient air.

An excavator according to the twelfth aspect is the excavator according to the eleventh aspect in which the hydrogen tank and the electric pump device are arranged to be spaced apart from each other in a first direction.

According to this aspect, the hydrogen tank and the electric pump device are arranged to be spaced apart from each other in the first direction. This allows the cooling air to pass through the gap between the hydrogen tank and the electric pump device. In other words, obstruction of the flow of the cooling air by the hydrogen tank and the electric pump device can be minimized. As a result, thermal accumulation within the housing space can be mitigated. Thus, the hydrogen tank and the electric pump device can be protected from the effects of heat emitted by the fuel cell.

From the foregoing description, many modifications and other embodiments of the present disclosure would be obvious to a person having ordinary skill in the art. Therefore, the foregoing description should be interpreted only as an example and is provided for the purpose of teaching the best mode for carrying out the present disclosure to a person having ordinary skill in the art. Substantial changes in details of the structures and/or functions of the present disclosure are possible within the spirit of the present disclosure.

## Claims

1. An excavator including a slewing body rotatably disposed on a traveling device, the excavator comprising:
a hydrogen tank that stores hydrogen;
a fuel cell that generates electric power by consuming the hydrogen in the hydrogen tank; and
an electric pump device that is driven by the electric power generated by the fuel cell to discharge working fluid, wherein
the hydrogen tank and the electric pump device are housed in a housing space within the slewing body, and
the fuel cell is disposed in the slewing body at a distance from the housing space.

2. The excavator according to claim 1, wherein
the slewing body includes, as the housing space, a first housing space enclosed by a first cover body and a second housing space located at a distance from the first housing space and enclosed by a second cover body different from the first cover body, and
the fuel cell is housed in the second housing space.

3. The excavator according to claim 2, wherein
the slewing body includes a passage, and
the passage is disposed between the first cover body and the second cover body.

4. The excavator according to claim 1, wherein
working equipment is disposed on the slewing body on one side in a first direction,
the fuel cell is disposed on the one side in the first direction relative to a pivot axis of the slewing body, and
the housing space is formed on the other side in the first direction relative to the pivot axis of the slewing body.

5. The excavator according to claim 4, wherein
the slewing body includes a cabin, and
the fuel cell is disposed on an opposite side of the work equipment from the cabin in a second direction perpendicular to the first direction.

6. The excavator according to claim 2, further comprising:
a cooling device that cools the fuel cell; and
a duct, wherein
the slewing body includes a vent in a side surface in a second direction perpendicular to a first direction,
the cooling device is disposed within the slewing body to face the vent, and
the duct places a leeward side of the cooling device and the second housing space in communication.

7. The excavator according to claim 2, further comprising:
a cooling device that cools the fuel cell, wherein
the slewing body includes a vent in a side surface in a second direction perpendicular to a first direction, and
the cooling device is disposed within the slewing body to face the vent and overlap the hydrogen tank and the electric pump device as viewed in the second direction.

8. The excavator according to claim 7, wherein
the hydrogen tank and the electric pump device are arranged to be spaced apart from each other in the first direction.

9. The excavator according to claim 1, wherein
the slewing body includes, in a side surface in a second direction perpendicular to a first direction, a vent leading to the housing space, and
the hydrogen tank and the electric pump device are arranged in the first direction in the housing space.

10. The excavator according to claim 1, further comprising:
a valve that controls a flow of the hydrogen supplied from the hydrogen tank to the fuel cell, wherein
the slewing body includes a vent in a side surface in a second direction perpendicular to a first direction, and an inspection opening in another side surface in the second direction,
the vent and the inspection opening lead to the housing space, and
the valve is disposed proximate to the inspection opening with respect to the hydrogen tank.

11. An excavator including a slewing body rotatably disposed on a traveling device, the excavator comprising:
a hydrogen tank that stores hydrogen;
a fuel cell that generates electric power by consuming the hydrogen in the hydrogen tank;
an electric pump device that is driven by the electric power generated by the fuel cell to discharge working fluid; and
a radiator that cools the fuel cell, wherein
the hydrogen tank and the electric pump device are housed in a housing space within the slewing body,
the slewing body includes a vent in a side surface on one side in a second direction,
the radiator is disposed within the slewing body to face the vent, and
the radiator is disposed to overlap the hydrogen tank and the electric pump device as viewed in the second direction.

12. The excavator according to claim 11, wherein
the hydrogen tank and the electric pump device are arranged to be spaced apart from each other in a first direction.
